# EUROPEAN PATENT APPLICATION

(11) **EP 4 624 781 A1**
(43) Date of publication of application: **01.10.2025**
(21) Application number: 24166345.9
(22) Date of filing: 26.03.2024
(51) Int. Cl.: F16H 57/04

(54) **AN OIL COOLING ARRANGEMENT**

(71) Applicant: VOLVO TRUCK CORPORATION, 405 08 Göteborg (SE)
(72) Inventor: HAGERMAN, Henrik, 417 24 GÖTEBORG (SE); NORBERG, Sven, 422 47 HISINGS BACKA (SE)
(74) Representative: Kransell & Wennborg KB

(57) **Abstract**

An oil cooling arrangement (120, 220) for cooling at least an electric traction machine (10) of a vehicle (1), the arrangement (120, 220) comprising: a cooling circuit (80, 90) arranged to provide oil to the electric traction machine (10); a planetary gear set (130, 230) comprising a plurality of planetary members (131, 231), the planetary members (131, 213) being a sun gear (132, 232), a ring gear (134, 234) and a planet carrier (138, 238) carrying a plurality of planet gears (136, 236); a pinion (140) operably driven by the transmission (12) of the vehicle, the pinion (140) being connected to drive a first planetary member (132, 232) of the planetary gear set (130, 230); an electric motor (150) connected to drive a second planetary member (138, 234) of the planetary gear set (130, 230), the second planetary member being different to the first planetary member (132, 232); an oil pump (160, 260) connected to a third planetary member (134, 238) of the planetary gear set (130, 230) such that the oil pump (160, 260) is operably driven by the planetary gear set (130, 230) to pressurize oil in the cooling circuit (80, 90), the third planetary member (134, 238) being different to the first and second planetary members (132, 232, 138, 234).

## Description

### TECHNICAL FIELD

The disclosure relates generally to cooling arrangements of an electric traction machine. In particular aspects, the disclosure relates to an oil cooling arrangement. The disclosure can be applied to heavy-duty vehicles, such as trucks, buses, and construction equipment, among other vehicle types including marine vessels. Although the disclosure may be described with respect to a particular vehicle, the disclosure is not restricted to any particular vehicle.

### BACKGROUND

Electric vehicles have significantly increased in popularity due to their environmental benefits, efficiency, and performance. A critical aspect of electric vehicle performance is effective cooling of the electric traction machine, which is essential for maintaining operational efficiency, longevity, and safety. Traditional cooling methods primarily utilize coolant fluids circulated through jackets or channels surrounding the electric machine. However, these systems can be complex, bulky, and not optimally efficient across the varying operating modes of the electric vehicle.

There is a growing need for a more integrated, efficient, and/or compact cooling solution that can adapt to the dynamic operational requirements of electric vehicles, preferably while minimizing complexity and maximizing performance.

### SUMMARY

According to a first aspect of the disclosure, an oil cooling arrangement for cooling at least an electric traction machine of a vehicle is provided. The arrangement comprises: a cooling circuit arranged to provide oil to the electric traction machine; a planetary gear set comprising a plurality of planetary members, the planetary members being a sun gear, a ring gear and a planet carrier carrying a plurality of planet gears; a pinion operably driven by the transmission of the vehicle, the pinion being connected to drive a first planetary member of the planetary gear set; an electric motor connected to drive a second planetary member of the planetary gear set, the second planetary member being different to the first planetary member; at least one oil pump connected to a third planetary member of the planetary gear set such that the at least one oil pump is operably driven by the planetary gear set to pressurize oil in the cooling circuit, the third planetary member being different to the first and second planetary members. The first aspect of the disclosure may seek to overcome problems with inefficient and/or unsatisfactory cooling of the electric traction machine. That is, by the first aspect, and in particular owing to dual operability of the oil pump, i.e. by the transmission of the vehicle and the electric motor, the oil pump can be better controlled to cool the electric traction machine. For example, the arrangement may provide a sufficient flow of oil in the cooling circuit across a wide range of operating modes of the vehicle or of the electric traction machine (and corresponding temperature variations), by selectively engaging the electric motor to control the oil pump. Hereby, a sufficient oil flow in the cooling circuit may be enabled at various vehicle speeds (and various speeds of the electric traction machine). The configuration may allow for a compact design and efficient integration of the oil cooling arrangement into the vehicle's transmission. In other words, the invention leverages the mechanical advantages of a transmission operated oil pump. Connecting the at least one oil pump to a specific planetary member distinct from those connected to the pinion (and the transmission) and electric motor, may enable the oil pump to be selectively, and potentially combinably, operably driven by the transmission and the electric motor via the planetary gear set. This configuration may enable the oil pump to maintain desired oil pressure in the cooling circuit across a wide range of vehicle speeds and operating modes, enhancing the cooling efficiency for the electric traction machine. That is, this configuration may allow for variable speed control of the oil pump, adapting to different operating modes of the vehicle, without requiring multiple, separate drive systems. A technical benefit may include an efficient, adaptable, and/or compact oil cooling arrangement. The pinion may be described as being rotationally connected to the first planetary gear member, meaning that the pinion and the first planetary gear member is, during use, rotated in the same direction and with the same rotational speed and typically around the same rotational axis. Correspondingly, the electric motor, such as an output shaft of the electric motor, may be described as being drivingly connected to the second planetary member, meaning that the electric motor, or output shaft thereof, and the second planetary gear member is, during use, rotated in the same direction and with the same rotational speed (e.g. around the same rotational axis), or are connected to each other with one or more intermediate components, such as e.g. a gear wheel or a gear wheel interface, therebetween. The planetary gear set may be described as having a radial extension, wherein the sun gear is arranged in the center and arranged meshingly engaging with the planet gears arranged radially outside of the sun gear, and wherein the ring gear is arranged meshingly engaging with the planet gears and being arranged radially outside of the planet gears.

Optionally in some examples, including in at least one preferred example, the at least one oil pump is arranged radially outside of at least a part of the planetary gear set. A technical benefit may include a compact design of the oil cooling arrangement. For example, the sun gear of the planetary gear set may be defining a center from which a radial axis is extending towards the ring gear.

Optionally in some examples, including in at least one preferred example, the planetary gear set further comprises a sun gear shaft connecting the pinion and the sun gear. A technical benefit may include a compact arrangement for connecting the pinion with the planetary gear set. The sun gear is typically rotationally connected to the pinion via the sun gear shaft. For example, the sun gear shaft may be mechanically connected between the pinion and the sun gear. The pinion may be mechanically connected to the sun gear shaft, e.g. at a first end portion thereof, and the sun gear mechanically connected to the sun gear shaft, e.g. at a second end portion thereof, the second end portion of the sun gear shaft being opposite to the first end portion. Thus, the pinion may be mechanically coupled to the sun gear via the sun gear shaft.

Optionally in some examples, including in at least one preferred example, the second planetary member is the planet carrier carrying a plurality of planet gears, such that the electric motor is connected to drive the planet carrier. A technical benefit may include an efficient transmission of torque from the electric motor to the planetary gear set. The electric motor, such as an output shaft of the electric motor, may e.g. be drivingly connected, or rotationally connected, to the planet carrier.

Optionally in some examples, including in at least one preferred example, the planet carrier is connecting the electric motor and the planet gears of the planetary gear set. A technical benefit may include an efficient transmission of torque from the electric motor to the planet gears. The planet carrier carries, or supports, the planet gears, e.g. via a respective bearing. For example, the planet carrier may be mechanically coupled between the electric motor, such as an output shaft thereof, and the planet gears.

Optionally in some examples, including in at least one preferred example, the third planetary member is the ring gear of the planetary gear set, such that the ring gear is connected to drive the at least one oil pump. A technical benefit may include an efficient transmission of torque from the planetary gear set to the oil pump. For example, the ring gear is arranged meshingly engaged with the planet gears, and is mechanically coupled to the at least oil pump. For example, the ring gear is directly connected to the at least one oil pump, such as a piston of the oil pump, or is connected to the at least one oil pump via a connector.

Optionally in some examples, including in at least one preferred example, the at least one oil pump is arranged radially outside of the ring gear of the planetary gear set. A technical benefit may include an efficient torque transfer from the planetary gear set to the oil pump, and a compact design of the oil cooling arrangement. Thus, as the ring gear is arranged furthest radially of the planetary gear members, an arrangement of the oil pump radially outside of the ring gear facilitates torque transfer and entails a compact design.

Optionally in some examples, including in at least one preferred example, the second planetary member is the ring gear of the planetary gear set, such that the electric motor is connected to drive the ring gear. A technical benefit may include an efficient transmission of torque from the electric motor to the planetary gear set. The electric motor, such as an output shaft of the electric motor, may e.g. be rotationally connected to the ring gear.

Optionally in some examples, including in at least one preferred example, the oil cooling arrangement further comprises a disc mechanically coupled to the electric motor, wherein the disc is connecting the electric motor and the ring gear of the planetary gear set. A technical benefit may include an efficient transmission of torque from the electric motor to the planetary gear set. For example, the disc may be arranged operably driven by the electric motor, and mechanically coupled to the ring gear. For example, the disc may be rotationally connected to the ring gear. Thus, the disc may be mechanically coupled between the electric motor and the ring gear. For example, the disc may be directly connected to the electric motor or to an output shaft thereof, and the ring gear may be directly connected to the disc.

Optionally in some examples, including in at least one preferred example, the third planetary member is the planet carrier carrying a plurality planet gears. A technical benefit may include an efficient transmission of torque from the planetary gear set to the oil pump. For example, the ring gear is arranged meshingly engaged with the planet gears, and the planet carrier is mechanically coupled to the at least oil pump.

Optionally in some examples, including in at least one preferred example, the planet carrier is connected to drive the at least one oil pump. A technical benefit may include an efficient transmission of torque from the planetary gear set to the oil pump. For example, the carrier may be mechanically coupled between the planet gears and the at least one oil pump. For example, the planet carrier may be directly connected to the at least one oil pump, such as a piston of the oil pump, or be connected to the at least one oil pump via a connector. Thus, the at least one oil pump may be mechanically coupled to the planet gears via the planet carrier.

Optionally in some examples, including in at least one preferred example, the planet carrier comprises a hollow shaft extending towards the pinion, wherein the sun gear shaft of the planetary gear set is arranged to extend through the hollow shaft. A technical benefit may include a compact design of the oil cooling arrangement.

Optionally in some examples, including in at least one preferred example, the at least one oil pump is arranged radially outside of the hollow shaft of the planet carrier. A technical benefit may include efficient torque transfer from the planetary gear set to the oil pump, and a compact design of the oil cooling arrangement.

Optionally in some examples, including in at least one preferred example, the at least one oil pump is a mechanical displacement pump, such as a gerotor oil pump. A technical benefit may include high pumping efficiency, reliability, and/or a compact design. The gerotor oil pump may be a reversible gerotor oil pump.

Optionally in some examples, including in at least one preferred example, the cooling circuit is further arranged to cool the transmission of the vehicle, or the cooling circuit is a first cooling circuit and the oil cooling arrangement further comprises a second cooling circuit arranged to cool the transmission of the vehicle, wherein the at least one oil pump is operably driven by the planetary gear set to also pressurize oil in the second cooling circuit. A technical benefit may include improved utilization of the oil cooling arrangement. The cooling circuit(s) may comprise a pressurizing section at the position of the oil pump(s), a cooling section arranged downstream of the pressurizing section and arranged inside of the electric traction machine and/or in the transmission, and a returning section arranged downstream of the cooling section for returning the oil to the pressurizing section. The oil in the first and/or second cooling circuits may thus be referred to as a cooling oil.

Optionally in some examples, including in at least one preferred example, the at least one oil pump is at least two oil pumps. A technical benefit may include improved, and individual, control of the first and second cooling circuits. For example, a first oil pump is configured to pressurize oil in the first cooling circuit, and a second oil pump is configured to pressurize oil in the second cooling circuit. Each one of the first and second oil pumps may be mechanical displacement pumps, such as a gerotor oil pumps. Regardless of there is one or more oil pumps, the operating voltage of the oil pump(s) is typically 24 V or 48 V.

Optionally in some examples, including in at least one preferred example, the oil cooling arrangement further comprises a first housing for the electric motor and a second housing for the at least one oil pump, wherein the first housing is separate from the second housing, and wherein the planetary gear set is arranged in the second housing, or wherein the arrangement further comprises a third housing for the planetary gear set, wherein the first, second and third housings are separated. A technical benefit may include a compact design of the oil cooling arrangement. Thus, the at least one oil pump and the planetary gear set may be housed in the same housing, i.e. the second housing, different to that of the electric motor. This is e.g. preferred for the previously described embodiment in which the second planetary member is the planet carrier, the third planetary member is the ring gear and wherein the at least one oil pump is arranged radially outside of the ring gear. Alternatively, the at least one oil pump and the planetary gear set may be housed in different housings, i.e. the second and third housings. This is e.g. preferred for the previously described embodiment in which the second planetary member is the ring gear, the third planetary member is the planet carrier and wherein the at least one oil pump is arranged radially outside of the hollow shaft of the planet carrier. The first, second and third housings may be arranged along a common center axis, being parallel with the previously mentioned output shaft of the electric motor.

Optionally in some examples, including in at least one preferred example, the oil cooling arrangement further comprises a one-way clutch arranged to prevent the electric motor from spinning in reverse (or being driven in reverse or being rotated in reverse). A technical benefit may include reduced energy consumption of the electric motor. Owing to the one-way clutch, the electric motor is prevented from spinning in reverse, e.g. when there is no need for a torque transmission contribution from the electric motor to the planetary gear set, and the transmission is solely driving the at least one oil pump via the planetary gear set. For example, a resulting reaction torque may be transferred to the second planetary member when the electric motor is not powered. The one-way clutch may e.g. be arranged between the electric motor, such as an output shaft of the electric motor, and the second or third housing. For example, the one-way clutch may be arranged between the second planetary member, such as e.g. the ring gear or planet carrier, and the second or third housing. For example, the one-way clutch may be arranged between the planet carrier and the second housing or between the ring gear and the third housing. Hereby, the electric motor may be electrically disconnected, i.e. powered of, when it is not needed, or due to power loss to the electric motor.

Optionally in some examples, including in at least one preferred example, the first planetary member is the sun gear. A technical benefit may include efficient torque transfer from the pinion to the planetary gear set, and a compact design of the oil cooling arrangement. For example, the pinion may be rotationally connected to the sun gear. Thus, the pinion may be mechanically driven by the vehicle's transmission output, engaging the sun gear of the planetary gear set to transmit torque to the planetary gear set. That the first planetary member is the sun gear is preferably combined with the previously described embodiment in which the second planetary member is the planet carrier and the third planetary member is the ring gear, as well as the previously described embodiment in which the second planetary member is the ring gear and the third planetary member is the planet carri er.

Optionally in some examples, including in at least one preferred example, the oil cooling arrangement further comprises a control unit configured to operate the electric motor in a predefined manner in response to a predefined operation of the vehicle. For example, the control unit may be arranged to operate the electric motor to vary the speed and/or the transmitted torque to the planetary gear set in response to the predefined operation of the vehicle. For example, the speed of the oil pump may be varied by varying the speed of the electric motor. The predefined operation of the vehicle may e.g. correspond to a predefined operating mode of the vehicle, e.g. related to a predefined transmitted torque to the planetary gear set from the transmission. For example, the predefined operating mode of the vehicle may correspond to a predefined low power mode (or predefined low speed mode), a predefined high power mode (or predefined high speed mode), a predefined normal operating mode defined as an operating mode in between the predefined low power mode and predefined high power mode, and/or reversing. The predefined operation of the vehicle may additionality or alternatively be defined by one or more operating parameters, such as e.g. temperature of the electric traction machine and/or of the transmission, gear setting or gear selection, whether the electric traction machine is in reverse or forward operating state, speed of the electric traction machine and/or power of the electric traction machine. Thus, the control unit may be configured to continuously operate the electric motor in response to the operation of the vehicle, and in response to the one or more operating parameters.

The predefined operation of the vehicle may e.g. be defined in a look-up table available to the control unit. Moreover, the predefined operation of the vehicle, or at least the predefined low power mode, the predefined high power mode and the predefined normal operating mode may be defined by a temperature determination (e.g. temperature measurement of a temperature sensor) of the electric traction machine. The temperature determination of the electric traction machine typically corresponds to the cooling need of the electric traction machine. For example the predefined low power mode may be defined by that the temperature determination of the electric traction machine is below a predetermined first temperature threshold, the predefined high power mode may be defined by that the temperature determination of the electric traction machine is above a predetermined second temperature threshold, and the predefined normal operating mode may be defined by that the temperature determination of the electric traction machine is between the predetermined first and second temperature thresholds. The operation of the electric machine in a predefined manner may e.g. correspond to a predefined output torque of the electric motor, e.g. a predefined output torque from the output shaft of the electric motor. The predefined output torque may e.g. correspond to a predefined speed of the electric motor, or of the output shaft thereof. The control unit may e.g. be configured to determine a current operating mode of the electric traction machine as the predefined low power mode, wherein the control unit is further configured to operate the electric motor at a predefined speed (e.g. at a speed higher than a predetermined first speed threshold, and lower than a predetermined second speed threshold). Hereby, the electric motor and the transmission is both transmitting torque to the planetary gear set and are contributing to operate the oil pump. In other words, the electric motor facilitates in increasing the output of the oil pump (e.g. increasing the speed of the oil pump) in order to provide a sufficient flow rate for the oil in the cooling circuit. Alternatively, or additionally, the control unit is configured to determine a current operating mode of the electric traction machine as reversing, wherein the control unit is further configured to operate the electric motor may at a predefined speed (e.g. the same predefined speed as previously described, i.e. at a speed higher than a predetermined first speed threshold, and lower than a predetermined second speed threshold, or at another predefined speed, e.g. higher than the predetermined second speed threshold). Hereby, the electric motor may induce a positive rotational direction of the planetary member connected to the oil pump, regardless of the reversing action of the electric traction machine. Alternatively, or additionally, the control unit is configured to determine a current operating mode of the electric traction machine as the predefined high power mode, wherein the control unit is further configured to operate the electric motor at a predefined speed (e.g. the same predefined speed as previously described, i.e. at a speed higher than a predetermined first speed threshold, and lower than a predetermined second speed threshold, or at another predefined speed, e.g. higher than the predetermined second speed threshold). Hereby, the electric motor and the transmission is both transmitting torque to the planetary gear set and are contributing to operate the oil pump. Moreover, as previously mentioned, the electric motor may be electrically disconnected owing to the one-way clutch. Thus, the control unit may be configured to determine an operating mode in which the electric motor is not to transmit any torque to the planetary gear set (e.g. the previously mentioned predefined normal operating mode), wherein the control unit is further configured to turn off the electric motor.

Throughout the description, the wording "rotationally connected to" should be interpreted such that a component of the oil cooling arrangement is connected to another component of the oil cooling arrangement in such a way that the components rotate in the same direction and with the same rotational speed, typically around the same rotational axis. The components thus rotate in the same direction and with the same rotational speed when being rotationally connected to each other. Further, the wording "drivingly connected to" should be interpreted as two components being either directly connected to each other, i.e. the components rotate in the same direction and with the same rotational speed (typically around the same rotational axis), or are connected to each other with one or more intermediate components, such as e.g. a gear wheel or a gear wheel interfaces, therebetween. In the latter example, when a first component rotates, then a second component also rotates with a ratio to the first component. The first and second components may not necessarily rotate in the same direction and with the same rotational speed (and typically not around the same rotational axis). Typically, at least some components of the oil cooling arrangement are connectable by a clutch, e.g. between a shaft and a part of the housing, e.g. making the components selectively connectable.

According to a second aspect of the disclosure, a vehicle comprising the oil cooling arrangement of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicle further comprises an electric traction machine for propelling the vehicle, the electric traction machine being cooled by the oil cooling arrangement. As described with reference to the first aspect, the vehicle may further comprise vehicle transmission for transmitting the torque from the electric traction machine to the propulsion unit(s) of the vehicle (e.g. wheels of the vehicle), wherein the oil cooling arrangement is further configured to cool the transmission.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, side view of an electric vehicle comprising an electric machine for propelling the vehicle and an oil cooling arrangement for powering the electric machine according to one example.
**FIG. 2** is an exemplary schematic view of an oil cooling arrangement according to one example.
**FIG. 3** is an exemplary schematic view of an oil cooling arrangement according to one example.

### DETAILED DESCRIPTION

The detailed description set forth below provides information and examples of the disclosed technology with sufficient detail to enable those skilled in the art to practice the disclosure.

The disclosed technology may solve the problem relating to inefficient and/or unsatisfactory cooling of the electric traction machine. The disclosed technology comprises a specific arrangement enabling dual operability of the oil pump, i.e. by the transmission of the vehicle and by the electric motor. Hereby, the oil pump can be better controlled to cool the electric traction machine. By the arrangement of connecting the at least one oil pump to a specific planetary member distinct from those connected to the transmission (via the pinion) and the electric motor, the oil pump may be selectively, and potentially combinably, operably driven by the transmission and the electric motor via the planetary gear set. A technical benefit may include an efficient, adaptable, and/or compact oil cooling arrangement. A technical benefit may include improved design and/or management of the oil cooling arrangement. Another technical benefit may include improved arrangement of how the planetary gear set is driven by the transmission and the electric motor, and of how the planetary gear set drives the at least one oil pump.

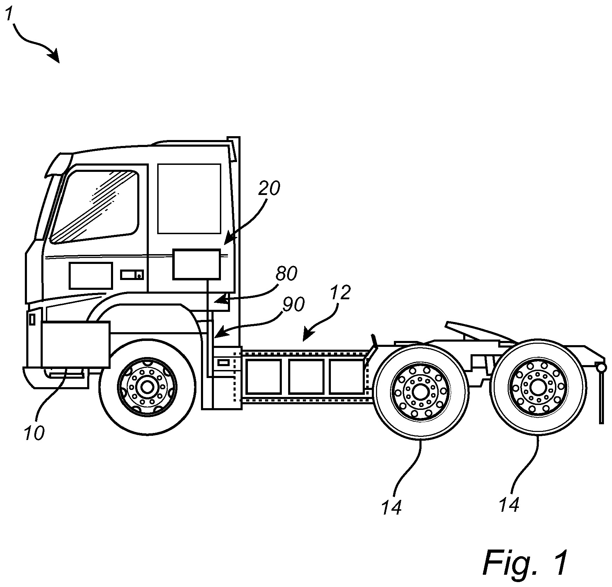

**FIG. 1** shows a vehicle 1 in the form of an exemplary heavy-duty truck. The vehicle 1 is an electric vehicle, such as a full electric vehicle or a hybrid, comprising at least one electric machine 10 (as an electric traction machine) powered by an energy storage system (not shown). The vehicle 1 further comprises other parts of the powertrain such as transmission 12 including drive shafts and wheels 14. The vehicle 1 further comprises an oil cooling arrangement 20 for cooling at least the electric traction machine 10 of the vehicle 1, which will be further exemplified in the following. The oil cooling arrangement 20 may e.g. comprise a first cooling circuit 80 arranged to provide oil for cooling the electric traction machine 10. However, the oil cooling arrangement 20 may be further configured to cool the transmission 12 of the vehicle, and may thus comprise a second cooling circuit 90 arranged to provide oil for cooling the transmission 12.

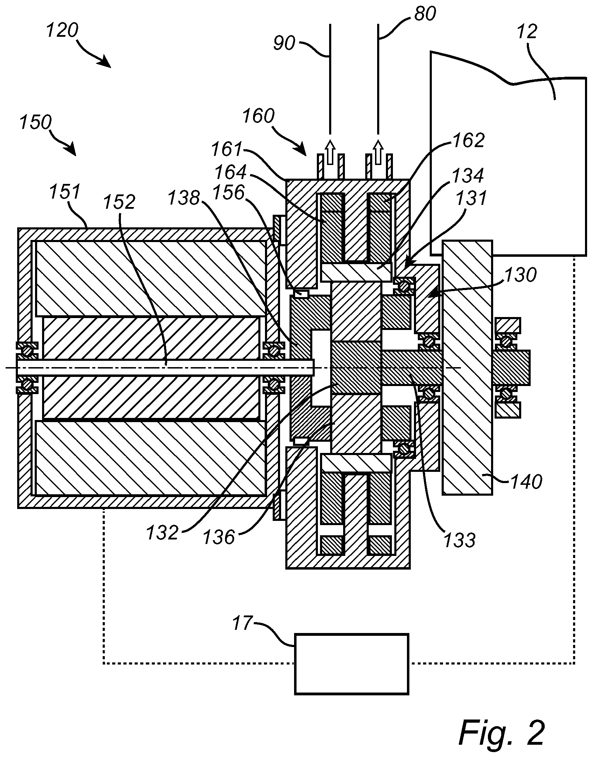

In **FIG. 2****,** an example oil cooling arrangement 120 is shown. The oil cooling arrangement 120 may e.g. correspond to the oil cooling arrangement 20 of the vehicle 1 of Fig. 1. Thus, the oil cooling arrangement 120 is configured to at least cool the electric traction machine 10 of the vehicle via the first cooling circuity 80, and may additionally be configured to cool the transmission 12 via the second cooling circuitry 90.

The cooling arrangement 120 comprises a planetary gear set 130 comprising a plurality of planetary members 131. The planetary members 131 are here a sun gear 132, a ring gear 134 and a planet carrier 138 carrying a plurality of planet gears 136. The planet carrier 138 carrying the planet gears 136 may be referred to as a planetary member (in singulars) even though the planet carrier 138 and all of the planet gears 136 are intended to be included by such reference. The planet gears 136 may e.g. be three. As shown in Fig. 2, the planet carrier 138 is mechanically coupled to the planet gears 136 by carrying, or supporting, planet gears 136. The planetary gear set 130 may be described as having a radial extension, wherein the sun gear 132 is arranged in the center and arranged meshingly engaging with the planet gears 136 which are arranged radially outside of the sun gear 132, and wherein the ring gear 134 is arranged meshingly engaging with the planet gears 136 and being arranged radially outside of the planet gears 136.

The oil cooling arrangement 120 further comprises a pinion 140 operably driven by the transmission 12 of the vehicle and being connected to drive a first planetary member of the planetary gear set 130, here being the sun gear 132. For example, the transmission 12 is drivingly connected to the pinion 140, and the pinion 140 is rotationally connected to the sun gear 132. The pinion 140 may be connected to the sun gear 132 via a sun gear shaft 133.

The oil cooling arrangement 120 further comprises an electric motor 150 connected to drive a second planetary member of the planetary gear set 130, here being the planet carrier 138 carrying the plurality of planet gears 136. Thus, the pinion 140 (and hence the transmission 12) is connected to another planetary member than the electric motor 150. Hereby, both the transmission 12, and the electric motor 150 may selectively, and combinably, drive the planetary gear set 130. As shown in Fig. 2, the electric motor 150 comprises an output shaft 152 which is rotationally connected to the planet carrier 138.

The oil cooling arrangement 120 further comprises at least one oil pump 160, here being exemplified as a first oil pump 162 and a second oil pump 164. The first oil pump 162 is configured to pressurize oil in the first cooling circuit 80, and the second oil pump 164 is configured to pressurize oil in the second cooling circuit 90. However, it should be mentioned that one oil pump may be used to pressurize the oil in both the first and second cooling circuits 80, 90, and or that the second oil pump 164 and the second cooling circuit 90 are omitted. Both the first and second oil pumps 162, 164 may be mechanical displacement pumps, such as a gerotor oil pumps. As shown in Fig. 2, both oil pumps 162, 164 are connected to a third planetary member of the planetary gear set 130, here being the ring gear 134. Thus, both oil pumps 162, 164 are driven by a planetary member other than that connected to the pinion 140 (and hence the transmission 12) and that connected to the electric motor 150. Hereby, the two oil pumps 162, 164 are operably driven by the planetary gear set 130 to pressurize oil in the first and second cooling circuits 80, 90.

As seen in Fig. 2, both oil pumps 162, 164 are arranged radially outside of the planetary gear set 130, and more specifically radially outside of the ring gear 134. Hereby, a compact design of the oil cooling arrangement 120 may be achieved. The oil cooling arrangement 120 may furthermore comprise a first housing 151 for the electric motor and a second housing 161 for the oil pumps 162, 164. As shown in Fig. 2, the first housing 151 is separate from the second housing 161. Moreover, as the oil pumps 162, 164 are arranged radially outside of the planetary gear set 130, and of the ring gear 134, the planetary gear set 130 may be housed in the second housing 161 together with the oil pumps 162, 164, further improving the compact design of the oil cooling arrangement 120.

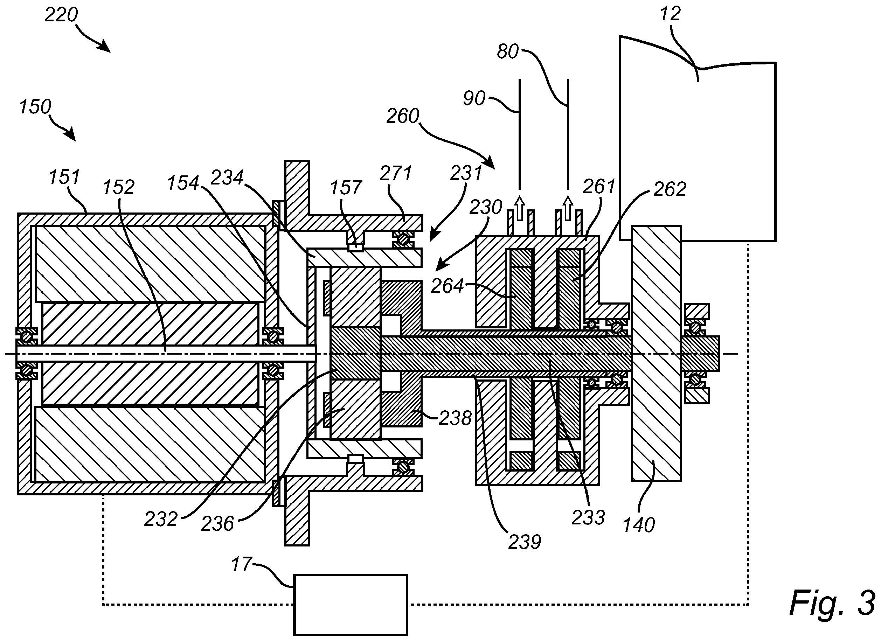

Turning to **FIG. 3****,** showing an example oil cooling arrangement 220. The oil cooling arrangement 220 of Fig. 3 is in part corresponding to the oil cooling arrangement 120 of Fig. 2, why some reference numerals are the same as they are referring to like components. The oil cooling arrangement 220 may e.g. correspond to the oil cooling arrangement 20 of the vehicle 1 of Fig. 1. Thus, the oil cooling arrangement 220 is configured to at least cool the electric traction machine 10 of the vehicle via the first cooling circuity 80, and may additionally be configured to cool the transmission 12 via the second cooling circuitry 90.

The cooling arrangement 220 comprises a planetary gear set 230 comprising a plurality of planetary members 231. The planetary members 231 are here a sun gear 232, a ring gear 234 and a planet carrier 238 carrying a plurality of planet gears 236. The planet carrier 238 carrying the planet gears 236 may be referred to as a planetary member (in singulars) even though the planet carrier 238 and all of the planet gears 236 are intended to be included by such reference. The planet gears 236 may e.g. be three. As shown in Fig. 3, the planet carrier 238 is mechanically coupled to the planet gears 236 by carrying, or supporting, planet gears 236. However, in Fig. 3, the planet carrier 238 is arranged on an opposite side of the sun gear as compared to the planet carrier 138 in Fig. 2. Moreover, as for the planetary gear set 130 of Fig. 2, the planetary gear set 230 of Fig. 3 may be described as having a radial extension, wherein the sun gear 232 is arranged in the center and arranged meshingly engaging with the planet gears 236 which are arranged radially outside of the sun gear 232, and wherein the ring gear 234 is arranged meshingly engaging with the planet gears 236 and being arranged radially outside of the planet gears 236.

Correspondingly to the oil cooling arrangement 120 of Fig. 2, the oil cooling arrangement 220 of Fig. 3 comprises a pinion 140 operably driven by the transmission 12 of the vehicle and being connected to drive a first planetary member of the planetary gear set 230, here being the sun gear 232. Moreover, the pinion 140 is connected to the sun gear 232 via a sun gear shaft 233.

Correspondingly to the oil cooling arrangement 120 of Fig. 2, the oil cooling arrangement 220 of Fig. 3 comprises an electric motor 150 connected to drive a second planetary member of the planetary gear set 230, here being the ring gear 234. Thus, the pinion 140 (and hence the transmission 12) is connected to another planetary member than the electric motor 150. Hereby, both the transmission 12, and the electric motor 150 may selectively, and combinably, drive the planetary gear set 230. As shown in Fig. 2, the electric motor 150 comprises an output shaft 152 which is rotationally connected to a disc 154, wherein the disc 154 is rotationally connected to the ring gear 134. Thus, the output shaft 152 of the electric motor 150 is rotationally connected to the ring gear 134.

Correspondingly to the oil cooling arrangement 120 of Fig. 2, the oil cooling arrangement 220 of Fig. 3 comprises at least one oil pump 260, here being exemplified as a first oil pump 262 and a second oil pump 264. The first oil pump 262 is configured to pressurize oil in the first cooling circuit 80, and the second oil pump 264 is configured to pressurize oil in the second cooling circuit 90. Both the first and second oil pumps 262, 264 may be mechanical displacement pumps, such as a gerotor oil pumps. As shown in Fig. 3, both oil pumps 262, 264 are connected to a third planetary member of the planetary gear set 230, here being the planet carrier 238 carrying the plurality of planet gears 236. Thus, both oil pumps 262, 264 are driven by a planetary member other than that connected to the pinion 140 (and hence the transmission 12) and that connected to the electric motor 150. Hereby, the two oil pumps 262, 264 are operably driven by the planetary gear set 230 to pressurize oil in the first and second cooling circuits 80, 90.

As seen in Fig. 3, the planet carrier 238 is connected to drive both oil pumps 262, 264. Stated differently, the oil pump 262, 264 are driven by the planet carrier 238, or of the planet gears 236 of the planetary gear set 230 via the planet carrier 238. In more detail, the planet carrier 238 comprises a hollow shaft 239 extending towards the pinion 140, wherein the sun gear shaft 233 of the planetary gear set 230 is arranged to extend through the hollow shaft 239. Hereby, both oil pumps 262, 264 may be arranged radially outside of at least a part of the planetary gear set 130, here being the hollow shaft 239 of the planet carrier 238. Hereby, a compact design of the oil cooling arrangement 120 may be achieved. The oil cooling arrangement 220 may furthermore comprise a first housing 151 for the electric motor, a second housing 261 for the oil pumps 262, 264, and a third housing 271 for the planetary gear set 230. As shown in Fig. 3, the first housing 151 is separate from the second housing 261 which is separate from the third housing 271. The first, second and third housings 151, 261, 271 may be arranged along a common center axis, being parallel with the output shaft 152 of the electric motor 150. Moreover, as the oil pumps 262, 264 are arranged radially outside of the hollow shaft 239 of the planet carrier 238, at least a part of the planetary gear set 230 may be housed in the second housing 261 together with the oil pumps 262, 264, further improving the compact design of the oil cooling arrangement 220.

For both of the oil cooling arrangements 120, 220 in Figs. 2-3, the electric motor 150 may be arranged with a freewheel-clutch. In more detail, the oil cooling arrangements 120, 220 may comprise a one-way clutch 156, 157 arranged to prevent the electric motor 150 from spinning in reverse (or operating in reverse), and thus enabling a reaction torque at zero speed without providing power to the electric motor. The one-way clutch may e.g. be arranged as in Fig. 2, between the electric motor 150 and the second housing 161, here exemplified as a one-way clutch 156 arranged between the planet carrier 138 and the second housing 161. Alternatively, the one-way clutch may e.g. be arranged as in Fig. 3, between the electric motor 150 and the third housing 271, here exemplified as a one-way clutch 157 arranged between the ring gear 234 and the third housing 271. Hereby, a free wheel mechanism is provided to the electric motor 150, which enables an electric disconnection of the electric motor 150 when it is not needed or due to power loss to the electric motor 150.

For both of the oil cooling arrangements 120, 220 in Figs. 2-3, the operation of the electric motor 150 may be dependent on the operation, or operating mode, of the vehicle, or of the electric traction machine 10. Thus, the oil cooling arrangements 120, 220 may comprise a corresponding control unit 17 configured to operate the electric motor 150. In more detail, the control unit 17 may be configured to operate the electric motor 150 in a predefined manner in response to a predefined operation of the vehicle 1. For example, the control unit 17 may be arranged to operate the electric motor 150 to vary the speed of the planetary gear set 130, 230 in response to the predefined operation of the vehicle 1, or a predefined operating mode of the electric traction machine 10. The predefined operation of the vehicle may e.g. be defined by the temperature of the electric traction machine 10 and may correspond to the power or speed of the electric traction machine 10. The predefined operation of the vehicle 1 may additionally correspond to a predefined transmitted torque to the planetary gear set 130, 230 from the transmission 12. The predefined operation may be defined by one or more operating parameters, such as e.g. temperature of the electric traction machine and/or of the transmission, gear setting or gear selection, whether the electric traction machine is in reverse or forward operating state, speed of the electric traction machine and/or power of the electric traction machine.

For example, the control unit 17 may e.g. be configured to determine a current operating mode of the electric traction machine 10, e.g. as a predefined low power mode (e.g. corresponding to a determined temperature of the electric traction machine 10 below a predetermined first temperature threshold) or a predefined high power mode (e.g. corresponding to a determined temperature of the electric traction machine 10 above a predetermined second temperature threshold), wherein the control unit 17 is further configured to operate the electric motor 150 at a predefined speed in response to the operating mode of the vehicle 1. Hereby, the electric motor 150 and the transmission 12 may both transmit torque to the planetary gear set 130, 230 and are contributing to operate the oil pumps 162, 164, 262, 264. In other words, the electric motor 150 may facilitate in increasing the output of the oil pumps 162, 164, 262, 264 (e.g. increasing the speed thereof) in order to provide a sufficient flow rate for the oil in the cooling circuits 80, 90. Moreover, as previously mentioned, the electric motor 150 may be electrically disconnected owing to the one-way clutch 156, 157. Thus, the control unit 17 may be configured to determine an operating mode in which the electric motor 150 is not to transmit any torque to the planetary gear set 130, 230 (e.g. the previously mentioned predefined normal operating mode). Moreover, the control unit 17 may be configured to turn off the electric motor 150. In other words, the control unit 17 may be configured to determine an operating mode in which the transmission 12 provides enough torque to the at least one oil pump 160, 260 (i.e. a sufficient oil flow in the cooling circuit(s) 80, 90) and therefore determine not to power the electric motor 150. This is possible owing to the one-way clutch 156, 157, and its ability to provide a reaction torque to the second planetary member 138, 234 enabling the at least one oil pump 160, 260 to be driven via the planetary gear set 130, 230 using only the first planetary member 132, 232 as input.

Example 1. An oil cooling arrangement for cooling at least an electric traction machine of a vehicle, the arrangement comprising: a cooling circuit arranged to provide oil to the electric traction machine; a planetary gear set comprising a plurality of planetary members, the planetary members being a sun gear, a ring gear and a planet carrier carrying a plurality of planet gears; a pinion operably driven by the transmission of the vehicle, the pinion being connected to drive a first planetary member of the planetary gear set; an electric motor connected to drive a second planetary member of the planetary gear set, the second planetary member being different to (or different from) the first planetary member; at least one oil pump connected to a third planetary member of the planetary gear set such that the at least one oil pump is operably driven by the planetary gear set to pressurize oil in the cooling circuit, the third planetary member being different to (or different from) the first and second planetary members.

Example 2. The arrangement of example 1, wherein the at least one oil pump is arranged radially outside of at least a part of the planetary gear set.

Example 3. The arrangement of any of examples 1-2, wherein the planetary gear set further comprises a sun gear shaft connecting the pinion and the sun gear.

Example 4. The arrangement of any of examples 1-3, wherein the second planetary member is the planet carrier carrying a plurality of planet gears, such that the electric motor is connected to drive the planet gears.

Example 5. The arrangement of examples 1-4, wherein the planet carrier is connecting the electric motor and the planet gears of the planetary gear set.

Example 6. The arrangement of any of examples 4-5, wherein the third planetary member is the ring gear of the planetary gear set, such that the ring gear is connected to drive the at least one oil pump.

Example 7. The arrangement of example 6, wherein the at least one oil pump is arranged radially outside of the ring gear of the planetary gear set.

Example 8. The arrangement of any of examples 1-3, wherein the second planetary member is the ring gear of the planetary gear set, such that the electric motor is connected to drive the ring gear.

Example 9. The arrangement of any of examples 1-3, 8, further comprising a disc mechanically coupled to the electric motor, wherein the disc is connecting the electric motor and the ring gear of the planetary gear set.

Example 10. The arrangement of any of examples 8-9, wherein the third planetary member is the planet carrier carrying a plurality planet gears.

Example 11. The arrangement of any one of examples 8-10, wherein the planet carrier is connected to drive the at least one oil pump.

Example 12. The arrangement of examples 3 and 11, wherein the planet carrier comprises a hollow shaft extending towards the pinion, and wherein the sun gear shaft of the planetary gear set is arranged to extend through the hollow shaft.

Example 13. The arrangement of example 12, wherein the at least one oil pump is arranged radially outside of the hollow shaft of the planet carrier.

Example 14. The arrangement of any of examples 1-13, wherein the at least one oil pump is a mechanical displacement pump, such as a gerotor oil pump.

Example 15. The arrangement of example 14, wherein the cooling circuit is further arranged to cool the transmission of the vehicle, or wherein the cooling circuit is a first cooling circuit and the oil cooling arrangement further comprises a second cooling circuit arranged to cool the transmission of the vehicle, wherein the at least one oil pump is operably driven by the planetary gear set to also pressurize oil in the second cooling circuit.

Example 16. The arrangement of any of examples 1-15, further comprising a first housing for the electric motor and a second housing for the at least one oil pump, wherein the first housing is separate from the second housing, and wherein the planetary gear set is arranged in the second housing, or wherein the arrangement further comprises a third housing for the planetary gear set, wherein the first, second and third housings are separated.

Example 17. The arrangement of any of examples 1-16, further comprises a one-way clutch arranged to prevent the electric motor from spinning in reverse.

Example 18. The arrangement of any one of examples 1-17, wherein the first planetary member is the sun gear.

Example 19. The arrangement of any one of examples 1-18, further comprising a control unit configured to operate the electric motor in a predefined manner in response to a predefined operation of the vehicle.

Example 20. A vehicle comprising the oil cooling arrangement of any of examples 1-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An oil cooling arrangement (120, 220) for cooling at least an electric traction machine (10) of a vehicle (1), the arrangement (120, 220) comprising:
- a cooling circuit (80, 90) arranged to provide oil to the electric traction machine (10),
- a planetary gear set (130, 230) comprising a plurality of planetary members (131, 231), the planetary members (131, 213) being a sun gear (132, 232), a ring gear (134, 234) and a planet carrier (138, 238) carrying a plurality of planet gears (136, 236),
- a pinion (140) operably driven by the transmission (12) of the vehicle, the pinion (140) being connected to drive a first planetary member (132, 232) of the planetary gear set (130, 230),
- an electric motor (150) connected to drive a second planetary member (138, 234) of the planetary gear set (130, 230), the second planetary member being different to the first planetary member (132, 232),
- at least one oil pump (160, 260) connected to a third planetary member (134, 238) of the planetary gear set (130, 230) such that the at least one oil pump (160, 260) is operably driven by the planetary gear set (130, 230) to pressurize oil in the cooling circuit (80, 90), the third planetary member (134, 238) being different to the first and second planetary members (132, 232, 138, 234).

2. The arrangement (120, 220) of claim 1, wherein the at least one oil pump (160, 260) is arranged radially outside of at least a part of the planetary gear set (130, 230).

3. The arrangement (120, 220) of any of claims 1-2, wherein the planetary gear set (130, 230) further comprises a sun gear shaft (133, 233) connecting the pinion (140) and the sun gear (133, 233).

4. The arrangement (120) of any of claims 1-3, wherein the second planetary member is the planet carrier (138) carrying a plurality of planet gears (136), such that the electric motor (150) is connected to drive the planet carrier (138) .

5. The arrangement (120) of any of claims 1-4, wherein the planet carrier (138) is connecting the electric motor (150) and the planet gears (136) of the planetary gear set (130).

6. The arrangement (120) of any of claims 4-5, wherein the third planetary member is the ring gear (134) of the planetary gear set (130), such that the ring gear (134) is connected to drive the at least one oil pump (160).

7. The arrangement (120) of claim 6, wherein the at least one oil pump (160) is arranged radially outside of the ring gear (134) of the planetary gear set (130).

8. The arrangement (220) of any of claims 1-3, wherein the second planetary member is the ring gear (234) of the planetary gear set (130), such that the electric motor (150) is connected to drive the ring gear (234).

9. The arrangement (220) of claim 8, wherein the third planetary member is the planet carrier (238) carrying a plurality planet gears (236).

10. The arrangement (120, 220) of any of claims 1-9, wherein the at least one oil pump (160, 260) is a mechanical displacement pump, such as a gerotor oil pump (162, 164, 262, 264).

11. The arrangement (120, 220) of claim 10, wherein the cooling circuit (80, 90) is further arranged to cool the transmission (12) of the vehicle (1), or wherein the cooling circuit is a first cooling circuit (80) and the oil cooling arrangement (120, 220) further comprises a second cooling circuit (90) arranged to cool the transmission (12) of the vehicle (1), wherein the at least one oil pump is operably driven by the planetary gear set (130, 230) to also pressurize oil in the second cooling circuit (90).

12. The arrangement (120, 220) of any of claims 1-11, further comprising a first housing (151) for the electric motor and a second housing (161, 261) for the at least one oil pump (160, 260), wherein the first housing (151) is separate from the second housing (161, 261), and wherein the planetary gear set (130) is arranged in the second housing (161), or wherein the arrangement further comprises a third housing (271) for the planetary gear set (230), wherein the first, second and third housings (151, 261, 271) are separated.

13. The arrangement (120, 220) of any of claims 1-12, further comprises a one-way clutch (156, 157) arranged to prevent the electric motor (150) from spinning in reverse.

14. The arrangement (120) of any one of claims 1-13, further comprising a control unit (17) configured to operate the electric motor in a predefined manner in response to a predefined operation of the vehicle (1)

15. A vehicle (1) comprising the oil cooling arrangement (120, 220) of any of claims 1-14.
